# EUROPEAN PATENT SPECIFICATION

(11) **EP 0 477 781 B1**
(45) Date of publication and mention of the grant of the patent: **30.11.1994**
(21) Application number: 91115962.2
(22) Date of filing: 19.09.1991
(51) Int. Cl.: A01G 7/04, A01G 1/04

(54) **Method of cultivating mushrooms, vegetables, or the like**
Verfahren zur Kultivierung von Pilzen, Gemüsen oder dergleichen
Méthode pour la culture des champignons, des légumes ou similaires

(30) Priority: 28.09.1990 JP 258961/90
(43) Date of publication of application: 01.04.1992
(73) Proprietor: BODYSONIC KABUSHIKI KAISHA, Shinjuku-ku, Tokyo (JP)
(72) Inventor: Komatsu, Akira, c/o Bodysonic Kabushiki Kaisha, Shinjuku-ku, Tokyo (JP)
(74) Representative: Lehn, Werner, Dipl.-Ing.

(56) References cited:
- EP-A- 0 071 383
- BE-A- 873 257
- FR-A- 2 019 383
- GB-A- 1 539 176
- BIOLOGICAL ABSTRACTS, vol. 57, no. 10 15th May 1974, page 6097, no.
- 57126, USA P. WEINBERGER et al. "The effect of variablefrequency sounds onplant growth" & CAN J. BOT. 51(10), 1851-1856

## Description

### BACKGROUND OF THE INVENTION

### Field of the Invention

The present invention relates to a method of cultivating mushrooms, vegetables, or the like, wherein the method is so designed to be capable of achieving a reduction of the period of cultivation and additionally attaining an improvement on the taste of the produce.

### Description of Prior Art

The cultivation of Shiitake mushrooms, for example, is done by growing Shiitake (Lentinus edodes) mushrooms on the bed log by making holes in the bed log, implanting the shiitake fungus in such holes, and keeping the bed log resting against a supporting wood frame for a long period of time. Moreover, Enokitake (Collybia velutipes (quel)) and Nameko (Pholiota nameko) are cultivated by putting a mixture of saw dust and rice bran in bins, with yeast implanted in the mixture, and placing the bins on a shelf in a room where temperature, humidity, and so forth are set at their appropriate levels. Furthermore, kaiware daikon (Japanese radish seedlings) and hydroculture tomatoes are grown to attain a certain quality level by adequately controlling light, temperature, humidity, nutrients, water, and so forth.

In a method of cultivating mushrooms, vegetables, or the like as described above, the activity of the shiitake fungus and the yeasts will give considerable influence to the taste of the produce, but, on the other hand, the vegetables of the species mentioned above will face the problem how light, temperature, humidity, nutrients, water, and so forth are to be secured in their prescribed values. Thus, it is required that the control of these items should always be performed in a rigorous manner. Now, all of the shiitake fungus, yeasts, or vegetables are living beings, and it has been verified through experiments that these living beings will have greater activity when vibrations are given to them and that they will have more vigorous propagating power and so forth than when vibrations are not given to them. Therefore, it can be conceived to generate vibrations. The simplest apparatus that can be used for this purpose is a mechanical apparatus using a cam or the like such as disclosed in the document FR-A-2 019 383. Also, an apparatus using ultrasonic waves can be cited as a generally available apparatus which generates vibrations by an electrical process.

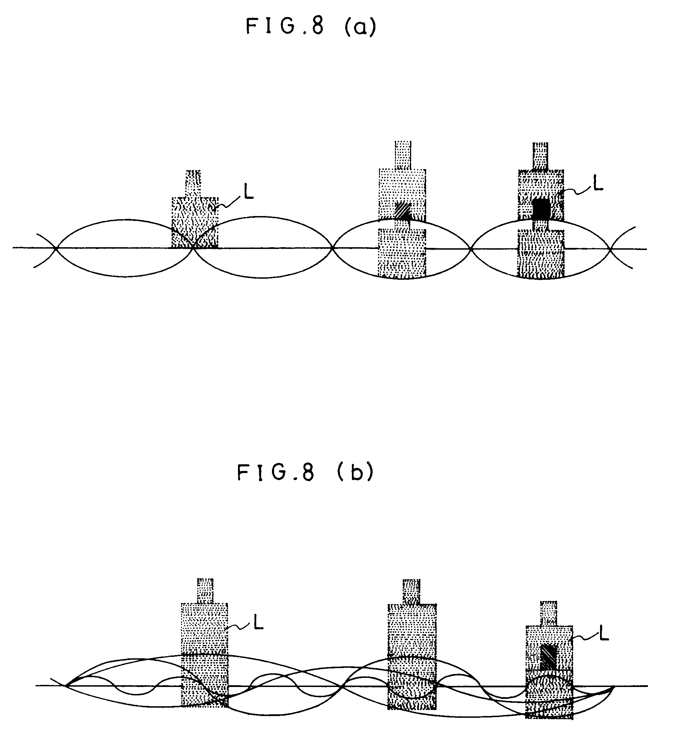

However, such a mechanical apparatus or such an apparatus using ultrasonic waves will generate repetitions of their simple vibration waveforms, and it is not possible with any of these apparatuses to produce changes in the vibration waveforms at all times. Fig. 8 (a) illustrates a vibration generated at a single frequency with a mechanical apparatus or with an ultrasonic generator. Fig. 8 (b) illustrates a vibration which, like a musical signal or the like, undergoes a constant change along with the elapse of time. It can be observed here that, when a load L, such as a shelf, is vibrated with the vibration shown in (a), it is possible to vibrate the load L considerably at the top amplitude part of the vibration, but it is not possible to vibrate the load L at all the bottom amplitude part of the vibration. On the other hand, it is found that the vibration shown in (b) is accompanied with changes which occur moment by moment both in frequency and in amplitude, so that it is possible to vibrate the load L without any lack of consistency.

The present invention has been made through utilization of this property present in musical signals, and it is intended to achieve an improvement on the taste of these mushrooms and vegetables by giving vibrations with low frequency signals such as music in the course of the cultivation of mushrooms, vegetables, and so forth.

### SUMMARY OF THE INVENTION

As a means of overcoming the problems described above, the present invention offers a method of cultivating mushrooms or vegetables according to the features of Claim 1.

By this method constructed in this manner, it is possible to give the so-called "1/f fluctuation" (which will be described later) elicited by these musical signals by way of the supporting wood frame or the like in the course of growing mushrooms or vegetables and it is consequently possible to increase the activity of the shiitake fungus, yeasts or the like, or vegetables themselves. By this, it is made possible to achieve a reduction of the growth period of such mushrooms or vegetables, as the case may be, and also to make a considerable improvement on the taste of the produce.

### BRIEF DESCRIPTION OF THE DRAWINGS

Fig. 1 presents a perspective view illustrating an application of the method according to the present invention to the cultivation of Shiitake;
Fig. 2 presents a side view of the structure which is shown in Fig. 1;
Fig. 3 presents a sectional view illustrating one example of an electro-mechanical vibration transducer;
Fig. 4 presents a perspective view illustrating the state in which the method according to the present invention is applied to the cultivation of Enokitake (Collybia velutipes(Quel));
Fig. 5 presents a perspective view illustrating a case in which the method according to the present invention is applied to the cultivation of lettuce.
Fig. 6 presents a perspective view illustrating a case in which the method accroding to the present invention is applied to the cultivation of kaiware daikon (Japanese radish seedlings);
Fig. 7 presents a perspective view illustrating a case in which the method according to the present invention is applied to hydroculture tomatoes; and
Fig. 8 (a) and Fig. 8 (b) present illustrative drawings respectively illustrating the relationship between the waveforms of signals and vibrations.

### DETAILED DESCRIPTION OF THE INVENTION

### Example of Preferred Embodiment of the Invention

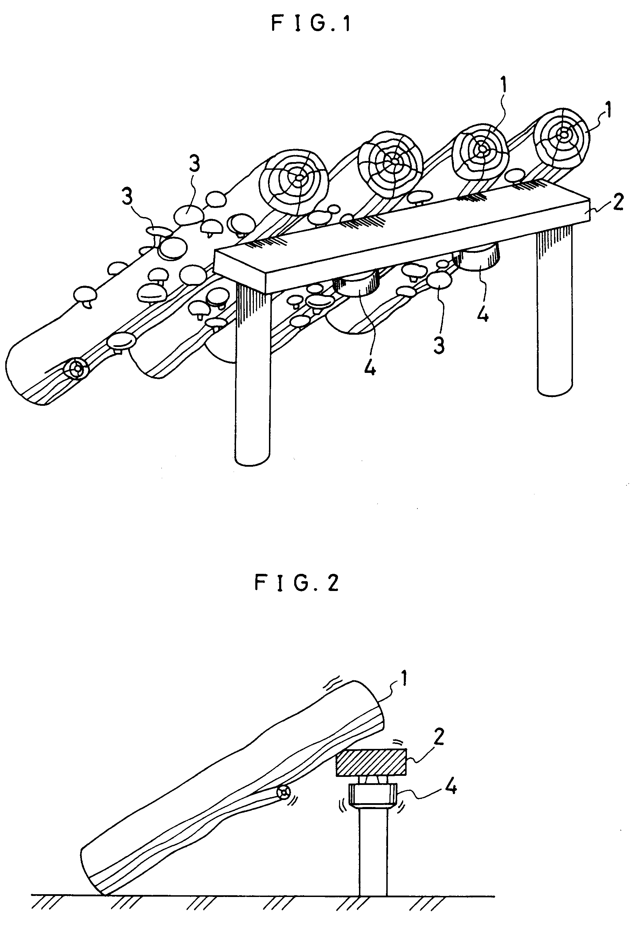

Now, a detailed description will be made of the examples of preferred embodiments of the method according to the present invention as illustrated in the accompanying drawings. Fig. 1 and Fig. 2 illustrate the manner how Shiitake is cultivated. In these drawings, the reference number 1 indicates a bed log, one end of which is set to rest against a supporting wood frame 2. This bed log 1 has holes (not illustrated in the drawings) already made in it and the shiitake fungus is implanted in those holes, and, in the state shown in these drawings, Shiitake 3 has started growing. On the upper back surface of supporting wood frame 2, two units of electro-mechanical vibration transducers 4 to be described next are installed to form a structure which gives vibrations to the supporting wood frame 2 when low frequency signals such as music are fed to the above-mentioned vibration transducers 4. These vibrations form the "1/f fluctuation", which will be described later.

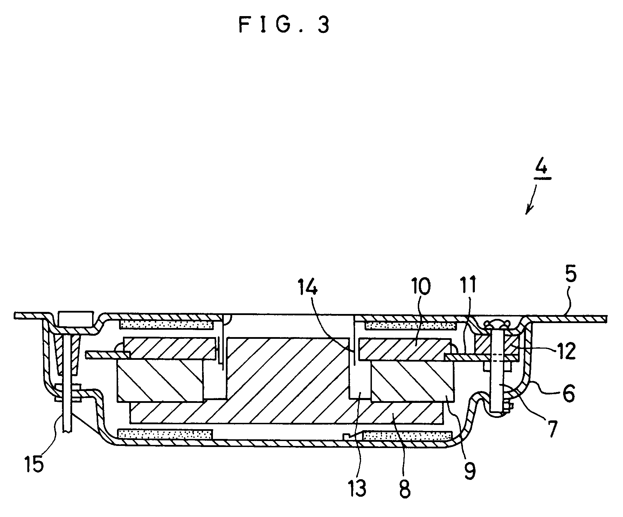

Now, a description will be made of the electro-mechanical vibration transducer 4 with reference to Fig. 3. The electro-mechanical vibration transducer 4 has an internal construction as shown in Fig. 3. In this Fig. 3, the reference number 5 indicates a base plate with its outer circumference formed into a flange, and the reference number 6 indicates a cover. The cover 6 is fixed with a bolt 7 on the base plate 5. Then, inside the main unit of a case formed with these component parts, a construction as described below is housed and forms an electro-mechanical vibration transducer 4.

In Fig. 3, the reference number 8 indicates a york, which has a sectional area in the shape of the letter T, as shown in the drawing. On the outer circumferential area of the york 8 is installed a magnet 9 in a ring shape, and a nut plate 10 is provided on the outer side of the magnet 9, and these are supported with the above-mentioned bolt 7 via the ring spring 11 working as a damper. The reference number 12 indicates a spacer. With the construction described above, a magnetic gap 13 is formed between the inner circumference of the top plate 10 one area of which is kept in contact with the magnet 9. In the inside of this gap 13 is provided a coil 14, to which a low frequency current is supplied via a cord 15 from an acoustic equipment not shown in the drawing. The electro-mechanical vibration transducer 4 which is constructed in this manner is fed with low frequency signals such as music while the vibration transducer 4 is in its state of being mounted on a supporting wood frame 2. That is to say, an integrated structure comprised of the york 8, the magnet 9, and the top plate 10 will be vibrated in relation to the coil 14 by the effect of the magnetic interference between the coil 14 and the magnet 9 when the coil 14 receives a low frequency current from an acoustic equipment not shown in the drawing. With the vibration just mentioned, the supporting wood frame 2 on which this electro-mechanical vibration transducer 4 is installed will vibrate, and also the bed log 1 vibrates. This vibration activates the activities of the shiitake fungus, thereby promoting the growth of Shiitake and improving its taste.

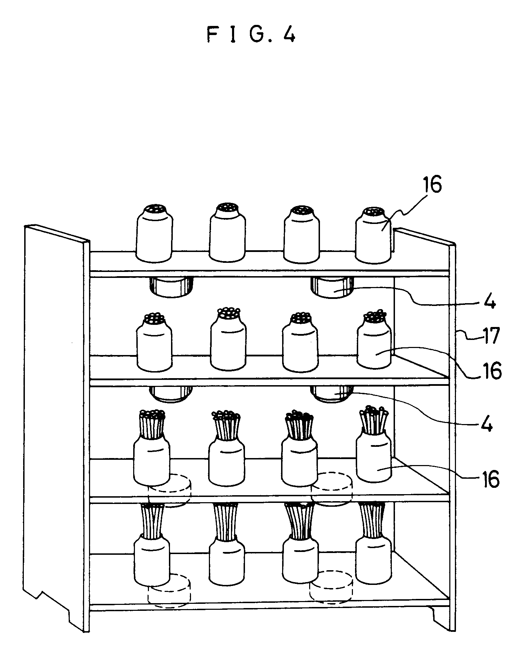

The construction shown in Fig. 4 is an apparatus used for giving low frequency vibrations such as those with music in the process of cultivating enokitake (Collybia velutipes). For the cultivation of enokitake (Collybia velutipes), saw dust and rice bran are mixed and filled in a bin, and the fungus is thereafter implanted in the mixture thus set in a bin, and then enokitake is germinated and cultivated with ambient temperature maintained at 18 °C. The mushrooms are to be harvested when they have grown up to the predetermined size. These cultivating operations are performed with the bins 16 placed on a shelf 17, and, accordingly, electro-mechanical vibration transducers 4 are installed on the lower surface of this shelf 17. Also in this case, low frequency signals, such as those of music, fed to electro-mechanical vibration transducers 4 will promote the activation of the fungus, thereby achieving a reduction of the cultivating time and also accomplishing an improvement on the taste of the produce. The points described above relate to mushrooms or the like. Next, a description is made of the method of cultivating vegetables.

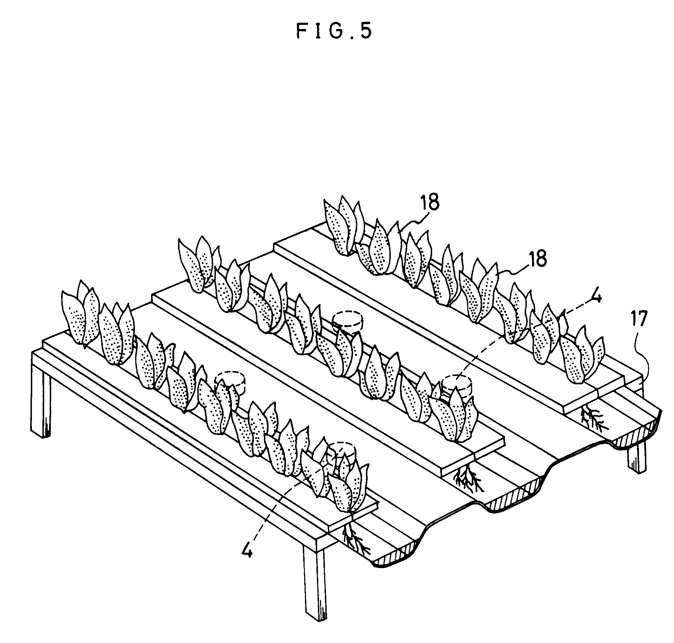

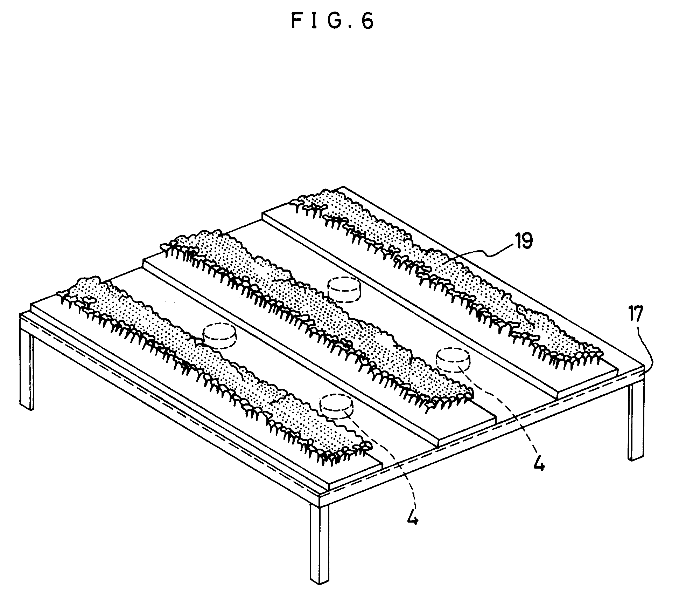

The construction shown in Fig. 5 is an apparatus used for the cultivation of lettuce 18. The construction shown in Fig. 6 is that for kaiware daikon (Japanese radish seedlings) 19. These apparatuses are the same as those described above in terms of the various cultivating conditions for the cultivation of such vegetables on a shelf 17 on which electro-mechanical vibration transducers 4 are installed. The cultivated vegetables receive the vibrations generated by the low frequency signals of music or the like applied to the electro-mechanical vibration transducers 4, and it is thereby made possible to reduce the cultivating period and to improve the taste of the cultivated vegetable.

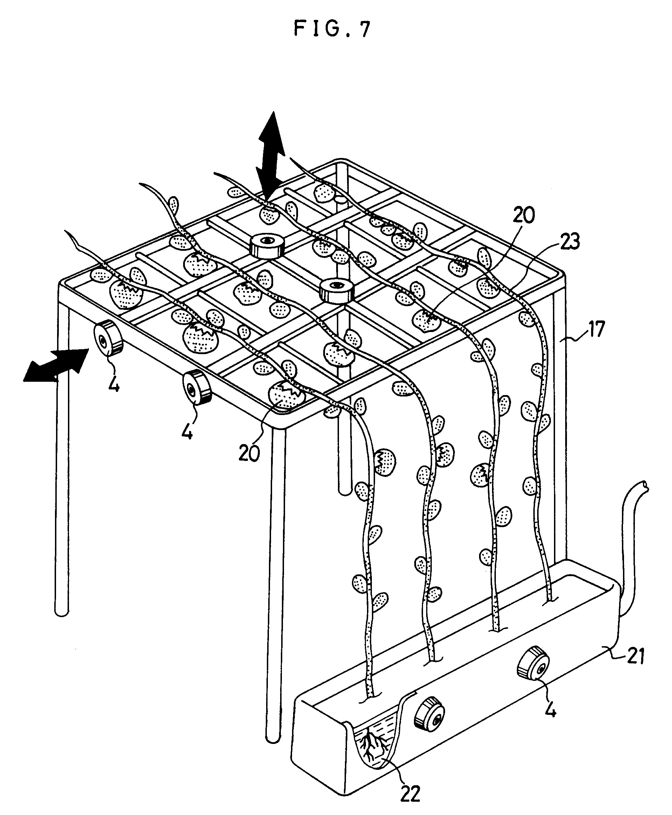

The construction shown in Fig. 7 is an apparatus used for the cultivation of hydro-culture tomatoes 20. In this case, electro-mechanical vibration transducers 4 are to be installed on a shelf and on a water tank 21 in a construction designed so that vibrations are given to the water 22 in the water tank 21 and the volubile stem 23 extending over the shelf 17. It is recommended that the intensity, etc. of the vibrations are determined experimentally. Also, the cultivation of tomatoes in this manner can achieve a reduction of the period needed for cultivation and an improvement on the taste of the produce.

Now, a description is made with respect to the application of musical signals to electro-mechanical vibration transducers 4. In many cases, music has the characteristics of the "1/f fluctuation" having correlation to moderate changes. In this regard, "the 1/f fluctuation" is used to represent the phenomenon of the measured values fluctuating around a certain mean value when various physical quantities are measured in physics. For human beings, "the 1/f fluctuation" is known as a pleasant stimulus with high affinity. A stimulus without any change in it tends to produce a weaker and weaker stimulative effect along with the passage of time. On the other hand, a stimulus which has appropriate changes accompanying it can maintain its stimulative effect. It is known that "the 1/f fluctuation" is at work at the level of cells and also at the level of water molecules (Professor Toshimitsu Musha at the Tokyo Institute of Technology), and, generally speaking, "the 1/f fluctuation" is found to be present in all the pacifying items existing in nature and can therefore be considered to be a phenomenon with a high degree of affinity to human beings. Thus, from a scientific viewpoint, it is considered effective to use music having the characteristics of the 1/f fluctuation as a vibrating stimulus to the water molecules, yeast, or the like. On the basis of this theory, it is considered possible to explain the effect of giving musical vibrations to the cultivation of mushrooms or vegetables described above.

In the examples of preferred embodiments given above, an electro-mechanical vibration transducer which as an internal structure illustrated in Fig. 3 is used as the vibration transducers 4. However, the present invention is not limited to this, but may be formed with electro-mechanical vibration transducers in a different construction. In essence, any electro-mechanical vibration transducer may be used for the present invention, so long as it is capable of generating vibrations in correspondence to those signals, such as musical signals, which have constant changes in frequency and in amplitude. Also, the low frequency current to be applied to the electro-mechanical vibration transducer 4 should be modified in such a manner that the output from it is changed appropriately or that the phase in which the current is to be applied is adjusted properly, depending on the size and condition of the shelf 17 or the supporting wood frame 2.

As described above, the present invention offers a method of cultivating mushrooms, vegetables, or the like, wherein the method is characterized by feeding low frequency signals, such as musical signals, to electro-mechanical vibration transducers which, being installed on the above-mentioned supporting wood frame, generate vibrations with low frequency signals such as music in the cultivation of mushrooms, vegetables, or the like with a supporting wood frame or the like. This method can give the so-called "1/f fluctuation" which these low frequency signals such as music have to the mushrooms or vegetables or the like in the course of their growth via the supporting wood frame or the like, and this method can therefore increase the activity of the shiitake fungus, yeasts or the like, or vegetables themselves. By this, the method according to the present invention is capable of achieving a reduction of the growth period of such mushrooms or vegetables or making considerable improvements on their taste.

## Claims

1. A method of cultivating mushrooms or vegetables on a shelf or frame by installing electromechanical vibration transducers for vibrating the shelf or frame, and feeding signals to the electromechanical vibration transducers thereby to transmit the vibrations of the vibration transducers to the mushrooms or vegetables by way of the shelf or frame, and characterized by the steps of:
i) selecting vibration frequencies in the acoustic range; and
ii) varying the amplitude and frequency of the signals with time.

2. A method as claimed in claim 1, wherein the signals are musical.

## Patentansprüche

1. Verfahren zum Anbau von Pilzen oder Gemüse auf einem Regal oder Gestell durch Anbringung elektromechanischer Schwingungswandler, um das Regal oder Gestell in Schwingungen zu versetzen, und Versorgung der elektromechanischen Schwingungswandler mit Signalen, um hierdurch die Schwingungen der Schwingungswandler auf die Pilze oder Gemüse über das Regal oder Gestell zu übertragen, **gekennzeichnet** durch folgende Schritte:
i) Auswählen von Schwingungsfrequenzen im akustischen Bereich; und
ii) zeitliches Variieren der Amplitude und der Frequenz der Signale.

2. Verfahren nach Anspruch 1, bei welchem die Signale Musiksignale sind.

## Revendications

1. Procédé de culture des champignons ou légumes sur une étagère ou un cadre par l'installation de transducteurs de vibration électro-mécanique destinés à faire vibrer l'étagère ou le cadre et à appliquer des signaux aux transducteurs de vibration électro-mécanique avec pour effet de transmettre les vibrations des transducteurs de vibration aux champignons ou légumes par la voie de l'étagère ou du cadre et caractérisé par les étapes consistant à :
i) sélectionner des fréquences de vibration dans la plage acoustique, et
ii) faire varier l'amplitude et la fréquence des signaux dans le temps.

2. Procédé selon la revendication 1, dans lequel les signaux sont musicaux.
